# EUROPÄISCHE PATENTSCHRIFT

(11) **EP 3 786 334 B1**
(45) Veröffentlichungstag und Bekanntmachung des Hinweises auf die Patenterteilung: **06.09.2023**
(21) Anmeldenummer: 20188338.6
(22) Anmeldetag: 29.07.2020
(51) Int. Cl.: D06F 37/30, F16H 55/36

(54) **WÄSCHEPFLEGEGERÄT MIT EINER RIEMENSCHEIBE**
LAUNDRY DEVICE WITH PULLEY
LAVE-LINGE DOTÉ D'UNE POULIE À COURROIE

(30) Priorität: 28.08.2019 DE 102019212954
(43) Veröffentlichungstag der Anmeldung: 03.03.2021
(73) Patentinhaber: BSH Hausgeräte GmbH, 81739 München (DE)
(72) Erfinder: Bittigau, Raik, 12524 Berlin (DE); Scholich, Robert, 13158 Berlin (DE); Weber, Tom, 10178 Berlin (DE)

(56) Entgegenhaltungen:
- EP-A1- 2 159 314
- WO-A1-2013/038432
- CN-B- 103 821 908
- DE-A1- 19 756 516

## Beschreibung

Die vorliegende Erfindung betrifft ein Wäschepflegegerät mit einer Riemenscheibe.

In einem herkömmlichen Wäschepflegegerät wird die Wäschetrommel mittels eines Trommelantriebs des Wäschepflegegeräts rotiert, um die in der Wäschetrommel aufgenommene Wäsche vorteilhaft zu pflegen. Ein entsprechender Trommelantrieb weist hierbei einen rotierenden Antriebsschaft auf, welcher einen an dem Antriebsschaft anliegenden Antriebsriemen antriebt. Der Antriebsriemen liegt wiederum an einer Riemenscheibe des Wäschepflegegeräts an, welche durch eine Welle mit der Wäschetrommel drehfest verbunden ist. Somit bewirkt der Trommelantrieb über den Antriebsriemen eine Rotation der Riemenscheibe, welche wiederum über die Welle die Wäschetrommel rotiert.

In herkömmlichen Wäschepflegegerät kann es gegebenenfalls zu einer unerwünscht hohen Lautstärke durch Luftschwingungen kommen, welche zwischen der rotierenden Riemenscheibe und Erhöhungen auftreten, welche an einer der Riemenscheibe zugewandten Laugenbehälterrückwand angeordnet sind.

In der US 2018/0327955 A1 ist eine Waschmaschine mit einem eine Wäschetrommel rotierenden Motor offenbart.

In der EP 2 159 314 A1 ist eine Waschmaschine mit einer Riemenscheibe offenbart.

In der WO 2013/038432 A1 ist eine Riemenscheibe für eine Waschmaschine offenbart, welche aus Plastik ist und eine Vielzahl an Armen aufweist.

In der DE 197 56 516 A1 ist Laugenbehälter einer Waschmaschine offenbart, wobei eine flächig ausgebildete Struktur in einer Wand des Laugenbehälters eingeprägt ist und zwischen den Vertiefungen der Struktur Erhöhungen bestehen.

Es ist die der Erfindung zugrundeliegende Aufgabe, ein Wäschepflegegerät mit einer Riemenscheibe zum Rotieren einer Wäschetrommel anzugeben, wobei eine Geräuschentwicklung während des Betriebs des Wäschepflegegeräts reduziert ist.

Diese Aufgabe wird durch die Gegenstand mit den Merkmalen nach den unabhängigen Ansprüchen gelöst. Vorteilhafte Ausführungsformen sind Gegenstand der abhängigen Ansprüche, der Beschreibung und der Zeichnungen.

Gemäß einem Aspekt wird die erfindungsgemäße Aufgabe durch ein Wäschepflegegerät gelöst, mit einer Wäschetrommel zur Aufnahme von Wäsche, einem Laugenbehälter zur Aufnahme von Waschflüssigkeit, wobei die Wäschetrommel in dem Laugenbehälter angeordnet ist und eine Welle aufweist, einer Riemenscheibe, welche mit der Welle drehfest verbunden ist, wobei der Laugenbehälter an einer der Riemenscheibe zugewandten Laugenbehälterrückwand eine Mehrzahl von Erhöhungen aufweist, und einem Trommelantrieb, welcher ausgebildet ist, die Wäschetrommel zu rotieren, wobei der Trommelantrieb einen Antriebsschaft und einen Antriebsriemen aufweist, wobei die Riemenscheibe einen Nabenbereich aufweist, welcher mit der Welle drehfest verbunden ist, und wobei die Riemenscheibe eine äußere Felge aufweist, welche den Nabenbereich umläuft, wobei der Antriebsriemen an der äußeren Felge und an dem Antriebsschaft anliegt, um eine Rotation des Antriebsschaftes auf die Riemenscheibe zu übertragen und die Wäschetrommel zu rotieren, wobei die Riemenscheibe eine Mehrzahl von Armen aufweist, welche sich von dem Nabenbereich zu der äußeren Felge jeweils entlang einer Erstreckungsachse erstrecken, wobei zumindest ein Armwinkel zwischen den jeweiligen Erstreckungsachsen zweier benachbarter Armen unterschiedlich zu einem anderen Armwinkel zwischen den jeweiligen Erstreckungsachsen zweier benachbarter Armen ist, insbesondere um die Lautstärke von durch die Rotation der Riemenscheibe verursachten Luftschwingungen zwischen den Armen und den Erhöhungen zu reduzieren.

Dadurch wird der technische Vorteil erreicht, dass zumindest ein sich unterscheidender Armwinkel der Mehrzahl von Armwinkeln zwischen den jeweiligen Erstreckungsachsen zweier benachbarter Arme die Symmetrie der Arme zueinander aufhebt, so dass eine nichtsymmetrische oder teilsymmetrische Riemenscheibe erhalten wird.

Bei einer herkömmlichen symmetrischen Riemenscheibe gemäß dem Stand der Technik bewirkt die Symmetrie der Arme zueinander das Auftreten von oftmals lauten Luftschwingungen zwischen der rotierenden Riemenscheibe und den an der Laugenbehälterrückwand angebrachten Erhöhungen. Derartige Luftschwingungen beruhen oftmals auf einem geringen Abstand zwischen den Erhöhungen und den Armen der Riemenscheibe, welcher aufgrund der oftmals begrenzten Bauraumsituation gewählt wird. Weisen die Erhöhungen ebenso wie die Arme eine symmetrische Struktur auf, werden insbesondere Luftschwingungen mit einer Ordnung angeregt, welche einem Vielfachen der Anzahl der Armen entsprechen, wobei sich entsprechende Luftschwingungen resonant verstärken können.

Im Gegensatz zu einer herkömmlichen symmetrischen Ringscheibe, bei der alle Armwinkel identisch sind, ist in der teilsymmetrischen oder nichtsymmetrischen Riemenscheibe gemäß der vorliegenden Offenbarung zumindest ein Armwinkel unterschiedlichen zu einem anderen Armwinkel, wodurch die Symmetrie der Arme zumindest teilweise aufgehoben wird.

Dadurch kann die Lautstärke der Luftschwingungen zwischen den Armen der rotierenden Riemenscheibe und den Erhöhungen signifikant reduziert werden. Ferner kann der Abstand zwischen der Riemenscheibe und der Laugenbehälterrückwand vorteilhaft reduziert werden, um den benötigten Bauraum vorteilhaft zu verkleinern.

Insbesondere umfasst die Riemenscheibe drei, vier, fünf, sechs, sieben, acht, neun oder zehn Arme, insbesondere fünf, sechs oder sieben Arme, wobei die Anzahl der Armwinkel zwischen den jeweiligen Erstreckungsachsen jeweils zweier benachbarter Arme insbesondere der Anzahl der Arme entspricht. Umfasst die Riemenscheibe insbesondere fünf Arme weist die Riemenscheibe insgesamt 5 Armwinkel zwischen den jeweiligen Erstreckungsachsen zweier benachbarter Arme auf.

Insbesondere sind die beiden benachbarten Arme, welche den zumindest einen Armwinkel begrenzen unterschiedlich zu den beiden benachbarten Armen, welche den anderen Armwinkel begrenzen. Somit sind in diesem Fall der zumindest eine Armwinkel und der andere Armwinkel nicht nebeneinander in der Riemenscheibe angeordnet.

Insbesondere weist die Riemenscheibe fünf Arme auf. Hierbei entspricht insbesondere der zumindest eine Armwinkel einem ersten Armwinkel, welcher zwischen einer Erstreckungsachse eines ersten Arms und einer Erstreckungsachse eines zweiten Arms gebildet ist. Hierbei entspricht insbesondere der andere Armwinkel einem dritten Armwinkel, welcher zwischen einer Erstreckungsachse eines dritten Arms und einer Erstreckungsachse eines vierten Arms gebildet ist. Der erste Armwinkel und der dritte Armwinkel sind unterschiedlich groß.

Alternativ entspricht insbesondere einer der beiden benachbarten Arme, welche den zumindest einen Armwinkel begrenzen, einem der beiden benachbarten Arme, welche den anderen Armwinkel begrenzen. In dem alternativen Fall sind der zumindest eine Armwinkel und der andere Armwinkel nebeneinander in der Riemenscheibe angeordnet.

Insbesondere weist die Riemenscheibe auch in dem alternative Fall fünf Arme auf. Hierbei entspricht insbesondere der zumindest eine Armwinkel einem ersten Armwinkel, welcher zwischen einer Erstreckungsachse eines ersten Arms und einer Erstreckungsachse eines zweiten Arms gebildet ist. Hierbei entspricht insbesondere der andere Armwinkel einem zweiten Armwinkel, welcher zwischen der Erstreckungsachse des zweiten Arms und einer Erstreckungsachse eines dritten Arms gebildet ist. Der erste Armwinkel und der zweite Armwinkel sind unterschiedlich groß.

Die Riemenscheibe ist insbesondere aus einem Metall, insbesondere aus Aluminium oder einer Aluminiumlegierung, geformt.

Unter einem Wäschepflegegerät wird ein Gerät verstanden, welches zur Wäschepflege eingesetzt wird, wie z.B. eine Waschmaschine oder ein Wäschetrockner. Insbesondere wird unter solch einem Wäschepflegegerät ein Haushaltswäschepflegegerät verstanden. Also ein Wäschepflegegerät, welches im Rahmen der Haushaltsführung verwendet wird, und mit dem Wäsche in haushaltsüblichen Mengen behandelt wird.

In einer vorteilhaften Ausführungsform des Wäschepflegegeräts ist die Riemenscheibe als eine teilsymmetrische Riemenscheibe ausgebildet, wobei insbesondere der zumindest eine Armwinkel und ein weiterer Armwinkel, welcher zwischen den jeweiligen Erstreckungsachsen zweier benachbarter weiterer Arme gebildet ist, gleich groß sind.

Dadurch wird der technische Vorteil erreicht, dass eine besonders wirksame Geräuschreduktion der Luftschwingungen sichergestellt wird. In der teilsymmetrischen Riemenscheibe ist der zumindest eine Armwinkel unterschiedlich zu dem anderen Armwinkel, und ist der zumindest eine Armwinkel gleich groß wie der weitere Armwinkel.

Der zumindest eine Armwinkel und der weitere Armwinkel, welche gleich groß sind, können insbesondere nebeneinander oder nicht nebeneinander in der Riemenscheibe angeordnet sein.

Insbesondere weist die Riemenscheibe fünf Arme auf. Hierbei entspricht insbesondere der zumindest eine Armwinkel einem ersten Armwinkel, welcher zwischen einer Erstreckungsachse eines ersten Arms und einer Erstreckungsachse eines zweiten Arms gebildet ist. Hierbei entspricht insbesondere der weitere Armwinkel einem zweiten Armwinkel, welcher zwischen der Erstreckungsachse des zweiten Arms und einer Erstreckungsachse eines dritten Arms gebildet ist. Der erste Armwinkel und der zweite Armwinkel sind insbesondere gleich groß.

In einer vorteilhaften Ausführungsform des Wäschepflegegeräts ist die Riemenscheibe als eine teilsymmetrische Riemenscheibe ausgebildet, wobei der andere Armwinkel und ein weiterer anderer Armwinkel, welcher zwischen den jeweiligen Erstreckungsachsen zweier weiterer benachbarter Arme gebildet ist, gleich groß sind.

Dadurch wird der technische Vorteil erreicht, dass eine besonders wirksame Geräuschreduktion der Luftschwingungen sichergestellt wird. In der teilsymmetrischen Riemenscheibe ist der zumindest eine Armwinkel unterschiedlich zu dem anderen Armwinkel, und sind der andere Armwinkel und der weitere andere Armwinkel gleich groß.

Der andere Armwinkel und der weitere andere Armwinkel, welche gleich groß sind, können insbesondere nebeneinander oder nicht nebeneinander in der Riemenscheibe angeordnet sein.

Insbesondere weist die Riemenscheibe fünf Arme auf. Hierbei entspricht insbesondere der zumindest eine Armwinkel einem ersten Armwinkel, welcher zwischen einer Erstreckungsachse eines ersten Arms und einer Erstreckungsachse eines zweiten Arms gebildet ist. Hierbei entspricht insbesondere der andere Armwinkel einem dritten Armwinkel, welcher zwischen einer Erstreckungsachse eines dritten Arms und einer Erstreckungsachse eines vierten Arms gebildet ist. Der erste Armwinkel und der dritte Armwinkel sind unterschiedlich groß. Hierbei entspricht insbesondere der weitere andere Armwinkel einem fünften Armwinkel, welcher zwischen einer Erstreckungsachse eines vierten Arms und einer Erstreckungsachse eines fünften Arms gebildet ist. Der dritte Armwinkel und der fünfte Armwinkel sind gleich groß.

In einer vorteilhaften Ausführungsform des Wäschepflegegeräts ist die Riemenscheibe als eine teilsymmetrische Riemenscheibe ausgebildet ist, wobei sich die Arme spiegelsymmetrisch zu einer Symmetrieachse der Riemenscheibe erstrecken, wobei die Symmetrieachse insbesondere einer Erstreckungsachse eines Armes entspricht.

Dadurch wird der technische Vorteil erreicht, dass eine besonders wirksame Geräuschreduktion der Luftschwingungen sichergestellt wird. In der teilsymmetrischen Riemenscheibe ist eine Symmetrieachse vorhanden, welche insbesondere einer Erstreckungsachse eines Armes entspricht, so dass die anderen Arme spiegelsymmetrisch zu der Symmetrieachse angeordnet sind.

In einer vorteilhaften Ausführungsform des Wäschepflegegeräts ist die Riemenscheibe als eine nichtsymmetrische Riemenscheibe ausgebildet, wobei alle Armwinkel zwischen den jeweiligen Erstreckungsachsen jeweils zweier benachbarter Armen unterschiedlich sind.

Dadurch wird der technische Vorteil erreicht, dass eine besonders wirksame Geräuschreduktion der Luftschwingungen sichergestellt wird.

In einer vorteilhaften Ausführungsform des Wäschepflegegeräts weichen die zwischen den jeweiligen Erstreckungsachsen zweier benachbarter Arme der Riemenscheibe gebildeten Armwinkel von den jeweiligen Armwinkeln einer entsprechenden symmetrischen Riemenscheibe um bis zu 10° ab, insbesondere um bis zu 7°.

Dadurch wird der technische Vorteil erreicht, dass trotz der wirksamen Geräuschreduktion weiterhin eine besonders hohe Stabilität der Riemenscheibe sichergestellt werden kann. Zur Erläuterung wird insbesondere auf eine Riemenscheibe mit fünf Armen gemäß einer Ausführungsform der vorliegenden Anmeldung verwiesen. In einer entsprechenden symmetrischen Riemenscheibe mit fünf Armen sind die Winkel zwischen den Armen identisch und betragen 72°, entspricht 360° geteilt durch fünf. In der entsprechenden teilsymmetrischen oder nichtsymmetrischen Riemenscheibe mit fünf Armen gemäß der Ausführungsform der vorliegenden Anmeldung weichen die Armwinkel zwischen den Armen um bis zu 10° von dem entsprechenden Winkel der symmetrischen Riemenscheibe ab. In diesem Fall betragen die Armwinkel der Riemenscheibe mit fünf Armen gemäß der Ausführungsform der vorliegenden Anmeldung hierbei zwischen 62° und 82°.

In einer vorteilhaften Ausführungsform des Wäschepflegegeräts erstrecken sich die Erhöhungen zumindest abschnittsweise radial von einem Mittenbereich der Laugenbehälterrückwand jeweils entlang einer weiteren Erstreckungsachse, wobei zumindest ein Erhöhungswinkel zwischen den jeweiligen weiteren Erstreckungsachsen zweier benachbarter Erhöhungen unterschiedlich zu einem anderen Erhöhungswinkel zwischen den jeweiligen weiteren Erstreckungsachsen zweier benachbarter Erhöhungswinkel ist.

Dadurch wird der technische Vorteil erreicht, dass zusätzlich zu der teilsymmetrischen oder nichtsymmetrischen Ausbildung der Arme der Riemenscheibe auch die an der Laugenbehälterrückwand angeordneten Erhöhungen teilsymmetrisch oder nichtsymmetrisch ausgebildet sein können, wodurch eine besonders wirksame Geräuschreduktion sichergestellt werden kann.

Gemäß einem zweiten Aspekt wird die erfindungsgemäße Aufgabe durch ein Wäschepflegegerät gelöst, mit einer Wäschetrommel zur Aufnahme von Wäsche, einem Laugenbehälter zur Aufnahme von Waschflüssigkeit, wobei die Wäschetrommel in dem Laugenbehälter angeordnet ist und eine Welle aufweist, einer Riemenscheibe, welche mit der Welle drehfest verbunden ist, wobei der Laugenbehälter an einer der Riemenscheibe zugewandten Laugenbehälterrückwand eine Mehrzahl von Erhöhungen aufweist, und einem Trommelantrieb, welcher ausgebildet ist, die Wäschetrommel zu rotieren, wobei der Trommelantrieb einen Antriebsschaft und einen Antriebsriemen aufweist, wobei die Riemenscheibe einen Nabenbereich aufweist, welcher mit der Welle drehfest verbunden ist, und wobei die Riemenscheibe eine äußere Felge aufweist, welche den Nabenbereich umläuft, wobei die Riemenscheibe eine Mehrzahl von Armen aufweist, welche sich von dem Nabenbereich zu der äußeren Felge jeweils entlang einer Erstreckungsachse erstrecken, wobei der Antriebsriemen an der äußeren Felge und an dem Antriebsschaft anliegt, um eine Rotation des Antriebsschaftes auf die Riemenscheibe zu übertragen und die Wäschetrommel zu rotieren, wobei sich die Erhöhungen zumindest abschnittsweise radial von einem Mittenbereich der Laugenbehälterrückwand jeweils entlang einer weiteren Erstreckungsachse erstrecken, wobei zumindest ein Erhöhungswinkel zwischen den jeweiligen weiteren Erstreckungsachsen zweier benachbarter Erhöhungen unterschiedlich zu einem anderen Erhöhungswinkel zwischen den jeweiligen weiteren Erstreckungsachsen zweier benachbarter Erhöhungen ist, insbesondere um die Lautstärke von durch die Rotation der Riemenscheibe verursachten Luftschwingungen zwischen den Armen und den Erhöhungen zu reduzieren.

Dadurch wird der technische Vorteil erreicht, dass alternativ oder zusätzlich zu der teilsymmetrischen oder nichtsymmetrischen Ausbildung der Riemenscheibe stattdessen die Erhöhungen in Bezug auf den Mittenbereich der Laugenbehälterrückwand teilsymmetrisch oder nichtsymmetrisch ausgebildet sein können, um in diesem Fall ebenfalls eine wirksame Geräuschreduktion der Luftschwingungen sicherzustellen, welche zwischen den Erhöhungen und den Armen bei einer Rotation der Riemenscheibe auftreten.

Gemäß dem zweiten Aspekt kann die Riemenscheibe als eine symmetrische Riemenscheibe ausgebildet sein, wobei sich in diesem Fall die Arme der Riemenscheibe in Bezug auf den Nabenbereich symmetrisch entlang der jeweiligen Erstreckungsachse zu der äußeren Felge erstrecken, so dass die Armwinkel zwischen der jeweiligen Erstreckungsachse zweier benachbarter Arme gleich sind.

Gemäß dem zweiten Aspekt kann die Riemenscheibe alternativ auch als eine teilsymmetrische oder nichtsymmetrische Riemenscheibe ausgebildet sein, wobei sich in diesem Fall die Arme der Riemenscheibe in Bezug auf den Nabenbereich teilsymmetrisch oder nichtsymmetrisch entlang der jeweiligen Erstreckungsachse zu der äußeren Felge erstrecken, so dass zumindest ein Armwinkel zwischen den jeweiligen Erstreckungsachsen zweier benachbarter Arme unterschiedlich zu einem anderen Armwinkel zwischen den jeweiligen Erstreckungsachsen zweier benachbarter Arme ist.

Die in Bezug auf den ersten Aspekt genannten vorteilhaften Ausführungsformen gelten ebenso als vorteilhafte Ausführungsformen gemäß dem zweiten Aspekt.

In einer vorteilhaften Ausführungsform des Wäschepflegegeräts gemäß dem ersten oder zweiten Aspekt weisen die Arme der Riemenscheibe jeweils ein mit der äußeren Felge verbundenes Armaußenende und ein mit dem Nabenbereich verbundenes Arminnenende auf, wobei das Arminnenende und das Armaußenende durch einen Armmittelbereich verbunden sind, wobei insbesondere eine Endbreite des Armaußenendes und/oder des Arminnenendes größer als eine Breite des Armmittelbereichs ist.

Dadurch wird der technische Vorteil erreicht, dass durch die im Vergleich zur Breite des Armmittelbereichs größere Endbreite des jeweiligen Armaußenendes und/oder Arminnenendes eine besonders stabile Befestigung des jeweiligen Armes an dem Nabenbereich, bzw. an der äußeren Felge, sichergestellt werden kann.

In einer vorteilhaften Ausführungsform des Wäschepflegegeräts gemäß dem ersten oder zweiten Aspekt weisen das Armaußenende und/oder das Arminnenende einen gekrümmten Außenrand, insbesondere einen konkav gekrümmten Außenrand, auf. Dadurch kann eine vorteilhafte Kraftübertragung zwischen dem jeweiligen Arm und dem Nabenbereich und/oder der äußeren Felge sichergestellt werden.

In einer vorteilhaften Ausführungsform des Wäschepflegegeräts gemäß dem ersten oder zweiten Aspekt ist zwischen zwei benachbarten Armen der Riemenscheibe jeweils ein Durchbruch geformt. Durch die Durchbrüche kann das Gewicht der Riemenscheibe reduziert werden.

In einer vorteilhaften Ausführungsform des Wäschepflegegeräts gemäß dem ersten oder zweiten Aspekt nimmt eine Durchbruchsbreite des jeweiligen Durchbruchs von dem Nabenbereich in Richtung der äußeren Felge zumindest abschnittsweise zu und/oder nimmt eine Durchbruchsbreite des jeweiligen Durchbruchs von dem Nabenbereich in Richtung der äußeren Felge zumindest abschnittsweise ab. Durch eine entsprechende Form der Durchbrüche wird eine vorteilhaft stabile Riemenscheibe sichergestellt.

In einer vorteilhaften Ausführungsform des Wäschepflegegeräts gemäß dem ersten oder zweiten Aspekt ist eine Größe des jeweiligen Durchbruchs abhängig von dem Armwinkel zwischen den Erstreckungsachsen der jeweiligen den Durchbruch begrenzenden Arme. Dadurch wird eine vorteilhaft stabile Riemenscheibe erhalten.

In einer vorteilhaften Ausführungsform des Wäschepflegegeräts gemäß dem ersten oder zweiten Aspekt weisen die Arme jeweils eine sich von dem Nabenbereich zu der äußeren Felge erstreckende Verdickungsstrebe auf, wobei die Verdickungsstrebe insbesondere an einer der Laugenbehälterrückwand abgewandten Seite des jeweiligen Arms angeordnet ist. Dadurch wird eine vorteilhaft stabile Riemenscheibe erhalten.

In einer vorteilhaften Ausführungsform des Wäschepflegegeräts gemäß dem ersten oder zweiten Aspekt weist der Nabenbereich eine Nabenöffnung auf, in welcher die Welle drehfest aufgenommen ist, wobei insbesondere die Verdickungsstreben mit einem die Nabenöffnung umlaufenden Verdickungsabschnitt des Nabenbereichs verbunden sind. Dadurch wird eine vorteilhaft stabile Riemenscheibe erhalten.

Ausführungsbeispiele der Erfindung sind in den Zeichnungen dargestellt und werden im Folgenden näher beschrieben.

Es zeigen:
- Fig. 1: eine schematische Ansicht eines Wäschepflegegeräts;
- Fig. 2: eine schematische Ansicht eines Wäschepflegegeräts mit einem Trommelantrieb zum Rotieren einer Wäschetrommel;
- Fig. 3: eine perspektivische Darstellung einer symmetrischen Riemenscheibe an einer Laugenbehälterrückwand eines Wäschepflegegeräts;
- Fig. 4: eine perspektivische Darstellung einer an einer Laugenbehälterrückwand angeordneten Riemenscheibe gemäß einer Ausführungsform;
- Figs. 5A, 5B: schematische Darstellungen einer nichtsymmetrischen Riemenscheibe gemäß einer weiteren Ausführungsform, sowie einer Lautstärke der entsprechend angeregten Luftschwingung;
- Figs. 6A, 6B: schematische Darstellungen einer teilsymmetrischen Riemenscheibe gemäß einer weiteren Ausführungsform, sowie einer Lautstärke der entsprechend angeregten Luftschwingung;
- Fig. 7: eine schematische Darstellung von Winkelbereichen einer Riemenscheibe gemäß einer weiteren Ausführungsform; und
- Fig. 8: eine perspektivische Darstellung einer teilsymmetrischen Riemenscheibe an einer Laugenbehälterrückwand eines Wäschepflegegeräts gemäß einer weiteren Ausführungsform.

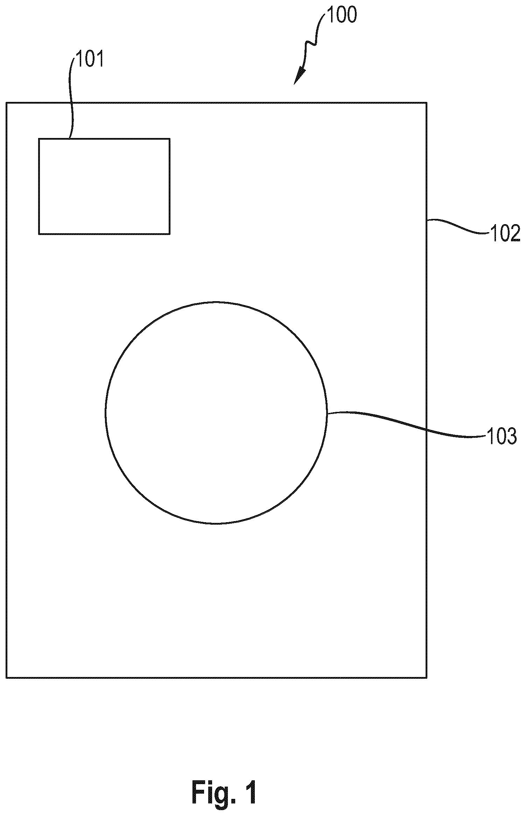

Fig. 1 zeigt eine schematische Ansicht eines allgemeinen Wäschepflegegeräts 100, wie z.B. eine Waschmaschine. Das Wäschepflegegerät 100 umfasst einen Vorratsbehälter 101, der auch als Einspülschale bezeichnet wird, und in die Waschmittel oder andere Wäschepflegesubstanzen eingefüllt werden können. Das Wäschepflegegerät 100 weist ein Gerätegehäuse 102 auf. Das Wäschepflegegerät 100 umfasst eine Gerätetür 103 zum Beladen des Wäschepflegegerätes 100 mit Wäsche.

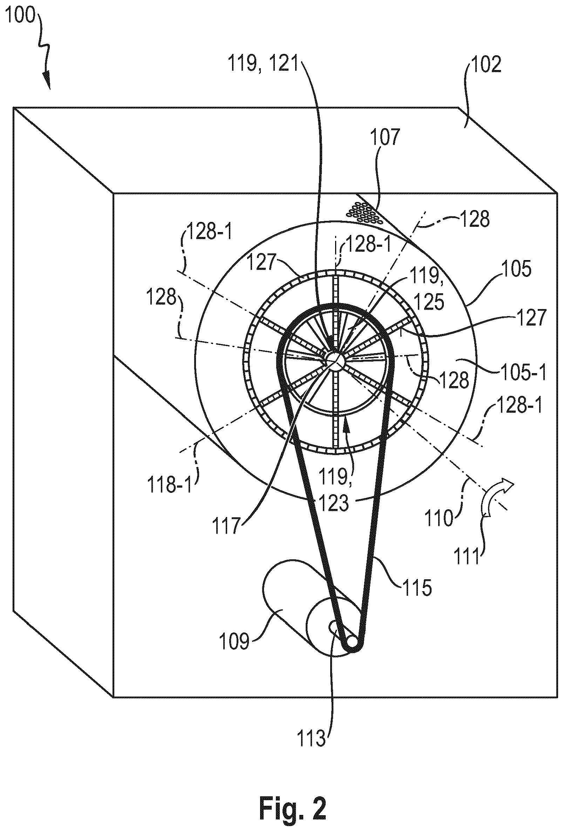

Fig. 2 zeigt eine schematische Ansicht eines Wäschepflegegeräts mit einem Trommelantrieb zum Rotieren einer Wäschetrommel. In der in Fig. 2 dargestellten schematische Ansicht ist eine Rückseite des Wäschepflegegeräts 100 mit einem zumindest abschnittsweise offenen Gerätegehäuse 102 dargestellt.

Das Wäschepflegegerät 100 weist einen Laugenbehälter 105 zur Aufnahme von Waschflüssigkeit und eine Wäschetrommel 107 zur Aufnahme von Wäsche auf, wobei die in Fig. 2 nur schematisch dargestellte Wäschetrommel 107 in dem Laugenbehälter 105 angeordnet ist.

Das Wäschepflegegerät 100 weist einen Trommelantrieb 109 auf, welcher ausgebildet ist die Wäschetrommel 107 zu rotieren, insbesondere die Wäschetrommel 107 um eine Rotationsachse 110 in einer Rotationsrichtung 111 zu rotieren. Der Trommelantrieb 109 weist einen Antriebsschaft 113 und einen Antriebsriemen 115 auf.

Die Wäschetrommel 107 weist eine Welle 117 auf. Das Wäschepfleggerät 100 weist eine mit der Welle 117 drehfest verbundene Riemenscheibe 119 auf, wobei insbesondere ein Nabenbereich 121 der Riemenscheibe 119 mit der Welle 117 drehfest verbunden ist. Die Riemenscheibe 119 weist eine äußere Felge 123 auf, welche den Nabenbereich 121 umläuft. Die Riemenscheibe 119 weist eine Mehrzahl von Armen 125 auf, welche sich von dem Nabenbereich 121 zu der äußeren Felge 123 jeweils entlang einer Erstreckungsachse 128 erstrecken.

Der Antriebsriemen 115 des Trommelantriebs 109 liegt hierbei an dem Antriebsschaft 113, sowie an der Riemenscheibe 119, insbesondere an der äußeren Felge 123, an, um eine Rotation des Antriebsschaftes 113 auf die Riemenscheibe 119 zu übertragen und die mit der Riemenscheibe 119 drehfest verbundene Wäschetrommel 107 zu rotieren.

Wie aus der Fig. 2 hervorgeht, ist die Riemenscheibe 119 insbesondere an einer Laugenbehälterrückwand 105-1 des Laugenbehälters 105 angeordnet. An der Laugenbehälterrückwand 105-1 sind ferner eine Mehrzahl von Erhöhungen 127 angeordnet, welche sich insbesondere zumindest abschnittsweise von einem in Fig. 2 nicht dargestellten Mittenbereich 129 jeweils radial entlang einer weiteren Erstreckungsachse 128-1 erstrecken, um eine vorteilhafte Stabilität des Laugenbehälters 105 sicherstellen.

Zwischen den Armen 125 der Riemenscheibe 119 und den Erhöhungen 127 an der Laugenbehälterrückwand 105-1 ist üblicherweise nur ein geringer Abstand vorhanden. In herkömmlichen Wäschepflegegeräten 100 können unter Umständen aufgrund der durch den Trommelantrieb 109 bewirkten Rotation der Riemenscheibe 119 und dem geringen Abstand zwischen den Armen 125 und den Erhöhungen 127 oftmals Luftschwingungen angeregt werden, welche oftmals eine erhebliche Lautstärke erreichen und gegebenenfalls die Betriebslautstärke des Wäschepflegegeräts 100 signifikant erhöhen können.

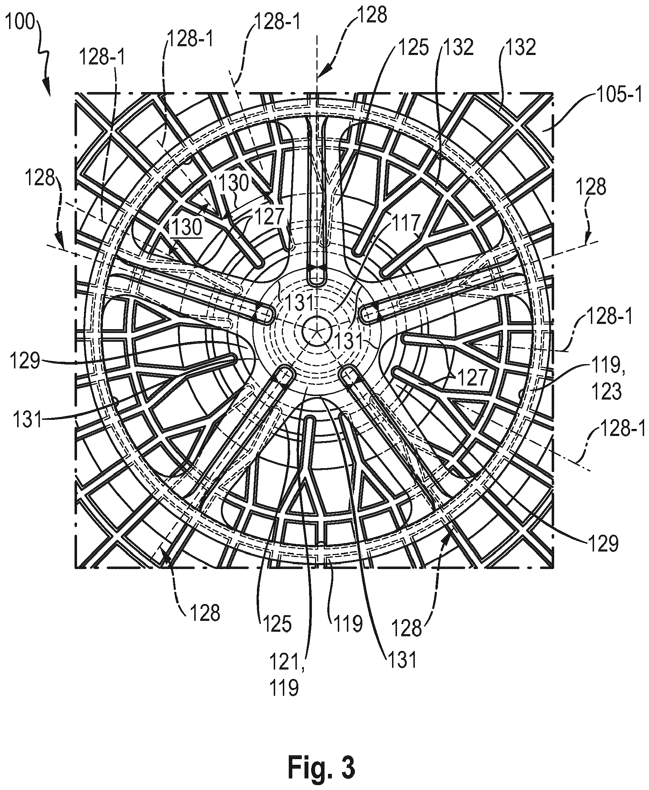

Fig. 3 zeigte eine perspektivische Darstellung einer symmetrischen Riemenscheibe an einer Laugenbehälterrückwand eines Wäschepflegegeräts. In der in Fig. 3 gezeigten Darstellung ist eine Laugenbehälterrückwand 105-1 des Wäschepflegegeräts 100 nur ausschnittsweise dargestellt.

Hierbei erstrecken sich an der Laugenbehälterrückwand 105-1 angeordnete Erhöhungen 127, insbesondere Rippen, von einem Mittenbereich 129 der Laugenbehälterrückwand 105-1 radial entlang einer weiteren Erstreckungsachse 128-1 nach außen. Die zwischen den jeweiligen weiteren Erstreckungsachsen 128-1 gebildeten Erhöhungswinkel 130 sind hierbei insbesondere gleich groß.

Der Mittenbereich 129 stabilisiert hierbei eine Welle 117 der Wäschetrommel 107. Wie aus der Fig. 3 hervorgeht, erstrecken sich hierbei die Erhöhungen 127 in Bezug auf den Mittenbereich 129 symmetrisch, insbesondere rotationssymmetrisch, zueinander.

In der in Fig. 3 dargestellten Ausführungsform weist die Laugenbehälterrückwand 105-1 insbesondere 16 sich von dem Mittenbereich 129 radial nach außen erstreckende Erhöhungen 127 auf. Wie in der Fig. 3 dargestellt ist, können sich die Erhöhungen 127 hierbei insbesondere in einem gewissen Abstand von dem Mittenbereich 129 aufteilen, bzw. können die Erhöhungen 127 insbesondere durch zumindest einen den Mittenbereich 129 umlaufenden Steg 132 miteinander verbunden sein.

Die Riemenscheibe 119 weist einen mit der Welle 117 drehfest verbundenen Nabenbereich 121 und eine den Nabenbereich 121 umlaufende äußere Felge 123 auf. Eine Mehrzahl von Armen 125 der Riemenscheibe 119, insbesondere fünf Arme 125, erstrecken sich hierbei jeweils entlang einer Erstreckungsachse 128 von dem Nabenbereich 121 zu der äußeren Felge 123.

Wie aus der Fig. 3 hervorgeht, ist die Riemenscheibe 119 als eine symmetrische Riemenscheibe 119 ausgebildet, welche sich dadurch auszeichnet, dass die zwischen den jeweiligen Erstreckungsachsen 128 jeweils benachbarter Arme 125 gebildeten Armwinkel 131 alle gleich sind. Da die in Fig. 3 gezeigte Riemenscheibe 119 fünf Arme 125 hat, betragen die Armwinkel 131 zwischen den Armen 125 somit allesamt jeweils 72°.

Da zwischen den Armen 125 der Riemenscheibe 119 und den Erhöhungen 127 der Laugenbehälterrückwand 105-1 oftmals nur ein geringer Abstand vorhanden ist, werden durch die Rotation der Riemenscheibe 119 oftmals Luftschwingungen mit einer hohen Lautstärke verursacht. Durch die sich symmetrisch erstreckenden Arme 125 und durch die sich insbesondere symmetrisch erstreckenden Erhöhungen 127 werden bei der Rotation der Riemenscheibe 119 Frequenzen der Luftschwingungen der fünften Ordnung oder einem Vielfachen der fünften Ordnung verstärkt angeregt, so dass aus diesem Grund die Betriebslautstärke des Wäschepflegegeräts 100 unter Umständen für den Nutzer unangenehm erhöht werden kann.

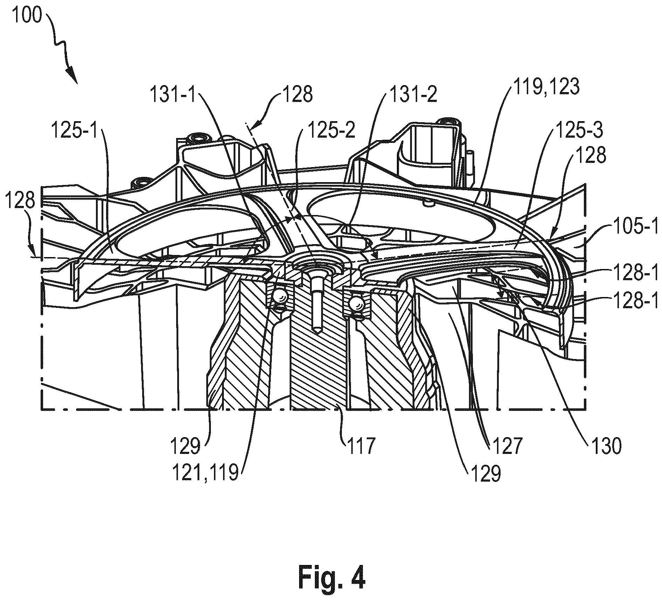

Fig. 4 zeigt eine perspektivische Darstellung einer an einer Laugenbehälterrückwand angeordneten Riemenscheibe gemäß einer Ausführungsform.

Um eine unangenehme Betriebslautstärke des Wäschepflegegeräts 100 zu reduzieren, ist die Riemenscheibe 119 gemäß der vorliegenden Erfindung nicht als eine symmetrische Riemenscheibe 119, sondern als eine teilsymmetrische oder nicht symmetrische Riemenscheibe 119 ausgebildet.

Die Riemenscheibe 119 gemäß der vorliegenden Erfindung 119 zeichnet sich dadurch aus, dass zumindest ein Armwinkel 131 zwischen den jeweiligen Erstreckungsachsen 128 zweier jeweils benachbarter Arme 125 der Riemenscheibe 119 unterschiedlich zu einem anderen Armwinkel 131 zwischen den jeweiligen Erstreckungsachsen 128 zweier jeweils benachbarter Arme 125 ist.

Wie aus der Fig. 4 hervorgeht ist ein erster Winkel 131-1 zwischen einem ersten Arm 125-1 und einem zweiten Arm 125-2 unterschiedlich zu einem zweiten Winkel 131-2 zwischen dem zweiten Arm 125-2 und einem dritten Arm 125-3.

Es konnte überraschend festgestellt werden, dass durch die sich unterscheidenden Winkel 131, 131-1, 131-2 zwischen den jeweiligen Armen 125, 125-1, 125-2, 125-3 der Riemenscheibe 119 die Lautstärke der entsprechend angeregten Luftschwingungen bei einer rotierenden Riemenscheibe 119 vorteilhaft reduziert werden kann. Somit kann zur Bauraumreduzierung in dem Wäschepflegegerät 100 die Riemenscheibe 119 in diesem Fall vorteilhaft an die Laugenbehälterrückwand 105-1 angenähert werden, und gleichzeitig eine reduzierte Lautstärke von Luftschwingungen zwischen den Armen 125 und den Erhöhungen 127 an der Laugenbehälterrückwand 105-1 sichergestellt werden.

Für weitere detaillierte Ausführungen zur Geometrie entsprechender teilsymmetrischer oder nicht symmetrischer Riemenscheiben 119 wird auf die nachfolgenden Ausführungsformen verwiesen.

In der in Fig. 4 dargestellten Schnittdarstellung ist ein Nabenbereich 121 der Riemenscheibe 119 mit einer Welle 117 der Wäschetrommel 107 drehfest verbunden. Die Welle 117 ist hierbei in einem Mittenbereich 129 der Laugenbehälterrückwand 105-1 drehbar angeordnet, um eine Rotation der Riemenscheibe 119 vorteilhaft auf die Wäschetrommel 107 zu übertragen. Hierbei erstrecken sich die Arme 125 der Riemenscheibe 119 von dem Nabenbereich 121 jeweils entlang einer Erstreckungsachse 128, insbesondere radial, zu einer äußeren Felge 123 der Riemenscheibe 119.

Alternativ oder zusätzlich kann eine Lautstärke der Luftschwingungen zwischen den Armen 125 und den Erhöhungen 127 auch vorteilhaft reduziert werden, wenn zumindest ein Erhöhungswinkel 130 zwischen den jeweiligen weiteren Erstreckungsachsen 128-1 zweier benachbarter Erhöhungen 127 der Laugenbehälterrückwand 105-1 unterschiedlich zu einem anderen Erhöhungswinkel 130 zwischen den jeweiligen weiteren Erstreckungsachsen 128-1 zweier benachbarter Erhöhungen 127 ist.

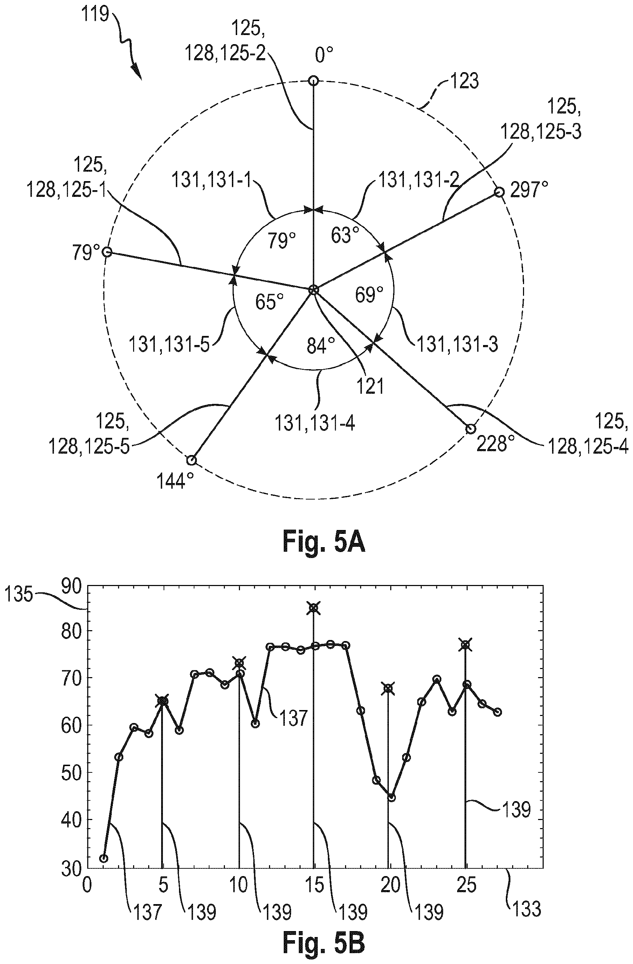

Die Figuren 5A, 5B zeigen schematische Darstellungen einer nichtsymmetrischen Riemenscheibe gemäß einer weiteren Ausführungsform, sowie einer Lautstärke der entsprechend angeregten Luftschwingung.

Die in Fig. 5A schematisch dargestellte nichtsymmetrische Riemenscheibe 119 weist einen Nabenbereich 121 auf, und weist eine Mehrzahl sich von dem Nabenbereich 121 entlang einer Erstreckungsachse 128 zu einer äußeren Felge 123 erstreckenden Arme 125 auf. Die Arme 125 und die jeweilige Erstreckungsachse 128 sind in der Fig. 5A nur schematisch dargestellt.

Ebenso wie in der in Fig. 4 dargestellten Riemenscheibe 119 ist auch in der in Fig. 5A dargestellten nichtsymmetrischen Riemenscheibe 119 gemäß der weiteren Ausführungsform zumindest ein Armwinkel 131 zwischen den jeweiligen Erstreckungsachsen 128 zweier benachbarter Arme 125 unterschiedlich zu einem anderen Armwinkel 131 zwischen den jeweiligen Erstreckungsachsen 128 zweier benachbarter Arme 125.

Darüber hinaus sind bei der in Fig. 5A dargestellten nichtsymmetrischen Riemenscheibe 119 insbesondere alle Armwinkel 131 zwischen den jeweiligen Erstreckungsachsen 128 jeweils zweier benachbarter Arme 125 unterschiedlich.

Die in Fig. 5A dargestellte Riemenscheibe 119 weist insbesondere fünf Arme 125 auf.

Ein erster Armwinkel 131-1 ist insbesondere zwischen einer Erstreckungsachse 128 eines ersten Arms 125-1 und einer Erstreckungsachse 128 eines zweiten Arms 125-2 gebildet, wobei der erste Armwinkel 131-1 insbesondere 79° umfasst. Ein zweiter Armwinkel 131-2 ist insbesondere zwischen einer Erstreckungsachse 128 eines zweiten Arms 125-2 und einer Erstreckungsachse 128 eines dritten Arms 125-3 gebildet, wobei der zweite Armwinkel 131-2 insbesondere 63° umfasst. Ein dritter Armwinkel 131-3 ist insbesondere zwischen einer Erstreckungsachse 128 eines dritten Arms 125-3 und einer Erstreckungsachse 128 eines vierten Arms 125-4 gebildet, wobei der dritte Armwinkel 131-3 insbesondere 69° umfasst. Ein vierter Armwinkel 131-4 ist insbesondere zwischen einer Erstreckungsachse 128 eines vierten Arms 125-4 und einer Erstreckungsachse 128 eines fünften Arms 125-5 gebildet, wobei der vierte Armwinkel 131-4 insbesondere 84° umfasst. Ein fünfter Armwinkel 131-5 ist insbesondere zwischen einer Erstreckungsachse 128 eines fünften Arms 125-5 und einer Erstreckungsachse 128 des ersten Arms 125-1 gebildet, wobei der fünfte Armwinkel 131-5 insbesondere 65° umfasst.

In der Fig. 5A sind die entsprechenden Winkelabschnitte an der äußeren Felge 123 durch die entsprechenden Winkelbereiche bezogen auf 360° gekennzeichnet.

Die in Fig. 5B dargestellte Lautstärke der entsprechend angeregten Luftschwingung der in Fig. 5A dargestellten rotierenden Riemenscheibe 119 zeigt entlang der Abszissenachse 133 die Anzahl der Schwingungsordnung der auftretenden Luftschwingungen und entlang der Ordinatenachse 135 die Geräuschlautstärke in dB.

Hierbei zeigt die erste Kurve 137 eine Lautstärke der entsprechend angeregten Luftschwingung der in Fig. 5A dargestellten teilsymmetrischen Riemenscheibe 119, wohingegen die zweite Kurve 139 die Lautstärke der entsprechend angeregten Luftschwingung einer in Fig. 3 dargestellten symmetrischen Riemenscheibe 119 zeigt.

Hierbei weist die der Riemenscheibe 119 zugewandte Laugenbehälterrückwand 105-1 des in Fig. 5A nicht dargestellten Laugenbehälters 105 insbesondere 16 sich entlang einer weiteren Erstreckungsachse 128-1 radial erstreckende Erhöhungen 127 auf.

Aus der zweiten Kurve 139 geht hervor, dass die Lautstärke der entsprechend angeregten Luftschwingung der in Fig. 3 dargestellten symmetrischen Riemenscheibe 119 bei der fünften Schwingungsordnung, bzw. bei einem Vielfachen der fünften Schwingungsordnung auftreten, und resonant verstärkt sind, so dass beispielsweise die 15te Schwingungsordnung eine Lautstärkenspitze von fast 90 dB erreicht.

Die in der ersten Kurve 137 dargestellte Lautstärke der entsprechend angeregten Luftschwingung der in Fig. 5A dargestellten teilsymmetrischen Riemenscheibe 119 zeigt eine größere Verteilung der Lautstärken der jeweiligen Ordnungen der entsprechend angeregten Luftschwingungen über die gesamte Zeitdauer mit geringeren maximalen Lautstärkespitzen.

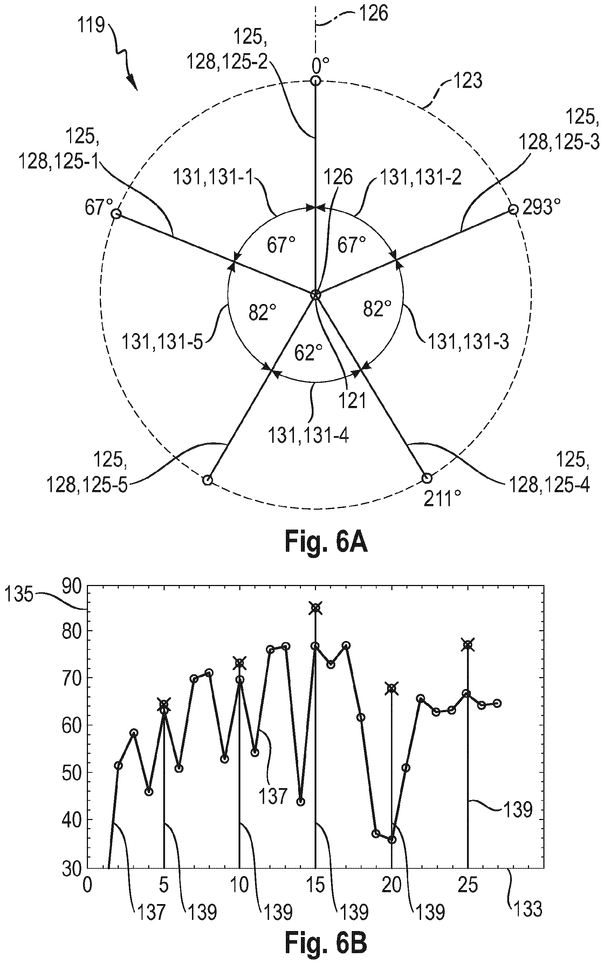

Die Figuren 6A und 6B zeigen schematische Darstellungen einer teilsymmetrischen Riemenscheibe gemäß einer weiteren Ausführungsform, sowie einer entsprechenden Lautstärke der entsprechend angeregten Luftschwingung der Riemenscheibe. Für weitere Details wird hierzu auf die Figuren 5A und 5B verwiesen.

Die in Fig. 6A gezeigte teilsymmetrische Riemenscheibe 119 zeichnet sich dadurch aus, dass sich die Arme 125 spiegelsymmetrisch zu einer Symmetrieachse 126 der Riemenscheibe 119 erstrecken, wobei die Symmetrieachse 126 insbesondere einer Erstreckungsachse 128 eines Arms 125 entspricht. In der in Fig. 6A dargestellten Ausführungsform entspricht die Symmetrieachse 126 der Erstreckungsachse 128 des zweiten Arms 125-2.

Für die Definitionen des jeweiligen ersten, zweiten, dritten, vierten und fünften Armwinkels 131-1, 131-2, 131-3, 131-4 und 131-5 wird auf die vorangegangenen Ausführungen in Bezug auf die Fig. 5A verweisen. Der erste Armwinkel 131-1 umfasst insbesondere 67°.

Der zweite Armwinkel 131-2 umfasst insbesondere 67°. Der dritte Armwinkel 131-3 umfasst insbesondere 82°. Der vierte Armwinkel 131-4 umfasst insbesondere 62°. Der fünfte Armwinkel 131-5 umfasst insbesondere 82°.

Bei der in Fig. 6A dargestellten teilsymmetrischen Riemenscheibe 119 ist zumindest ein Armwinkel 131 zwischen den jeweiligen Erstreckungsachsen 128 zweier benachbarter Arme 125 unterschiedlich zu einem anderen Armwinkel 131 zwischen den jeweiligen Erstreckungsachsen 128 zweier benachbarter Arme 125.

Insbesondere ist der erste Armwinkel 131-1, bezeichnet als der zumindest eine Armwinkel 131, mit 67° unterschiedlich zu dem dritten Armwinkel 131-3, bezeichnet als der andere Armwinkel 131 mit 82°.

Zudem entspricht bei der in Fig. 6A dargestellten teilsymmetrischen Riemenscheibe 119 der zumindest eine Armwinkel 131 zusätzlich einem weiteren Armwinkel 131, welcher zwischen den jeweiligen Erstreckungsachsen 128 zweier weiterer benachbarter Arme 125 gebildet ist.

Insbesondere entspricht der erste Armwinkel 131-1, bezeichnet als der zumindest eine Armwinkel 131 mit 67°, dem zweiten Armwinkel 131-2, bezeichnet als der weitere Armwinkel 131 mit 67°.

Zudem entspricht bei der in Fig. 6A dargestellten teilsymmetrischen Riemenscheibe 119 der andere Armwinkel 131 zusätzlich einem weiteren anderen Armwinkel 131, welcher zwischen den jeweiligen Erstreckungsachsen 128 zweier weiterer benachbarter Arme 125 gebildet ist.

Insbesondere entspricht der dritte Armwinkel 131-3, bezeichnet als der andere Armwinkel 131, mit 82° dem fünften Armwinkel 131-5, bezeichnet als der weitere andere Armwinkel 131 mit 82°.

Ferner weist die in Fig. 6A nicht dargestellte Laugenbehälterrückwand 105-1 insgesamt 16 sich jeweils entlang einer weiteren Erstreckungsachse 128-1 radial erstreckende Erhöhungen 127 auf.

Entsprechend der in Fig. 5B dargestellten Ausführungsform geht auch aus der in Fig. 6B dargestellten Ausführungsform die Lautstärken der entsprechend angeregten Luftschwingung der in Fig. 6A dargestellten teilsymmetrischen Riemenscheibe 119 hervor, so dass die Geräuschlautstärke vorteilhaft reduziert werden kann.

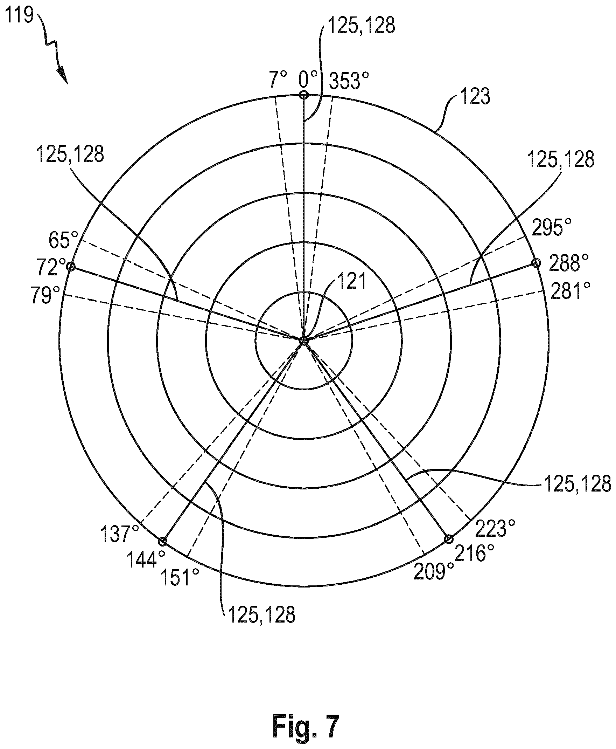

Fig. 7 zeigt eine schematische Darstellung von Winkelbereichen einer Riemenscheibe gemäß einer weiteren Ausführungsform. Die in Fig. 7 dargestellte symmetrische Riemenscheibe 119 weist fünf Arme, die jeweils einen Winkel von 72° zwischen den jeweiligen Erstreckungsachsen 128 zwei benachbarter Arme 125 einschließen. Hierbei sind die entsprechenden Winkelbereiche von 72°, 144°, 216°, 288° und 0° in der Fig. 7 an der äußeren Felge 123 angetragen.

Wie aus den gestrichelten Linien der Fig. 7 hervorgeht, können die Erstreckungsachsen 128 in einer entsprechenden teilsymmetrischen oder nichtsymmetrischen Riemenscheibe 119, wie z.B. in Fig. 5A oder Fig. 6A dargestellt, von den Erstreckungsachsen 128 einer symmetrischen Riemenscheibe 119 um bis zu 10° abweichen, insbesondere um bis zu 7° abweichen, so dass weiterhin eine ausreichend Stabilität der Riemenscheibe 119 sichergestellt werden kann.

In der Fig. 7 sind die entsprechenden Abweichungen um +/- 7° in Bezug auf die Winkelbereiche von 72°, 144°, 216°, 288° und 0° an der äußeren Felge 123 angetragen.

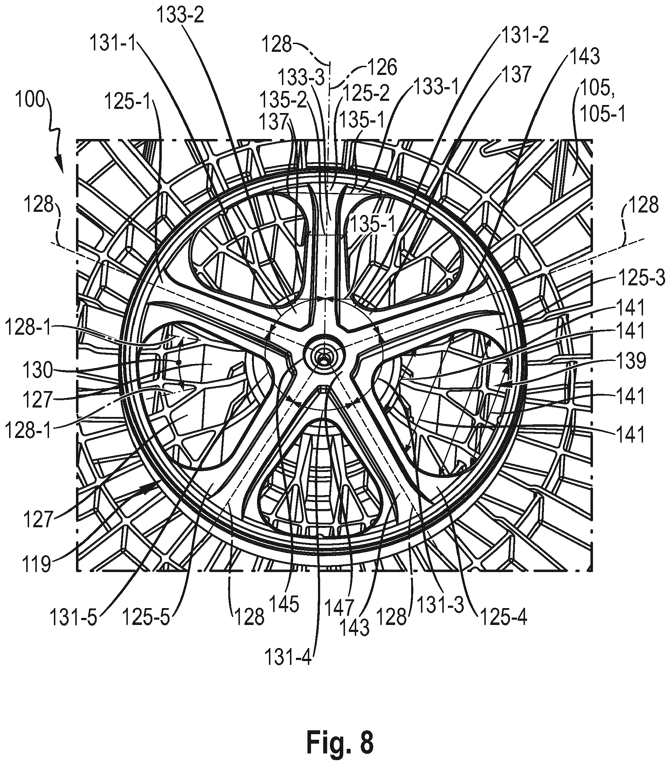

Fig. 8 zeigt eine perspektivische Darstellung einer teilsymmetrischen Riemenscheibe an einer Laugenbehälterrückwand eines Wäschepflegegeräts gemäß einer weiteren Ausführungsform.

Die Armwinkel 131 der in Fig. 8 dargestellten teilsymmetrischen Riemenscheibe 119 entsprechen den jeweiligen Armwinkeln 131 der in Fig. 6A dargestellten teilsymmetrischen Riemenscheibe 119, so dass für weitere Informationen hierzu auf die detaillierten Ausführungen in Bezug auf die Fig. 6A verwiesen wird.

Die Arme 125 der in Fig. 8 dargestellten teilsymmetrischen Riemenscheibe 119 erstrecken sich spiegelsymmetrisch zu einer Symmetrieachse 126 der Riemenscheibe 119, welche einer Erstreckungsachse 128 eines der Arme 125, insbesondere des zweiten Arms 125-2 entspricht. Somit entspricht der erste Armwinkel 131-1 dem zweiten Armwinkel 131-2 und entspricht der dritte Armwinkel 131-3 dem fünften Armwinkel 131-5.

Der erste und zweite Armwinkel 131-1, 131-2 sind unterschiedlich zu dem dritten Armwinkel 131-3 und dem fünften Armwinkel 131-5. Der vierte Armwinkel 131-4 ist unterschiedlich zu dem ersten, zweiten, dritten, und fünften Armwinkel 131-1, 131-2, 131-3, 131-5.

Ferner sind an der Laugenbehälterrückwand 105-1 eine Mehrzahl von Erhöhungen 127 angeordnet, welche sich von einem Mittenabschnitt 129 der Laugenbehälterrückwand 105-1 zumindest abschnittsweise entlang einer weiteren Erstreckungsachse 128-1 radial nach außen erstrecken, wobei die Erhöhungswinkel 130 zwischen den jeweiligen weiteren Erstreckungsachsen 128-1 gleich sind, um in Bezug auf den Mittenabschnitt 129 symmetrische Erhöhungen 127 zu bilden. Für weitere Details hierzu wird auf das bereits vorgebrachte verwiesen.

Auch wenn dies in Fig. 8 nicht dargestellt ist, ist es alternativ oder zusätzlich möglich, um eine Lautstärke von durch die Rotation der Riemenscheibe 119 verursachten Luftschwingungen zwischen den Armen 125 und den Erhöhungen 127 zu reduzieren, die Erhöhungen 127 in Bezug auf den Mittenabschnitt als nichtsymmetrische oder teilsymmetrische Erhöhungen 127 auszubilden.

Hierbei ist zumindest ein Erhöhungswinkel 130 der Mehrzahl von Erhöhungswinkeln 130 unterschiedlich zu einem anderen Erhöhungswinkel 130 der Mehrzahl von Erhöhungswinkeln 130. Für Ausgestaltungen entsprechender nichtsymmetrischer oder teilsymmetrischer Erhöhungen 127 wird auf die detaillierten Ausführungen zu den nichtsymmetrischen oder teilsymmetrischen Armen 125 der Riemenscheibe 119 gemäß der vorangegangenen Ausführungsformen verwiesen.

Die Arme 125 der in Fig. 8 dargestellten Riemenscheibe 119 weisen jeweils ein mit der äußeren Felge 123 verbundenes Armaußenende 133-1 und ein mit dem Nabenbereich 121 verbundenes Arminnenende 133-2 auf, wobei das Arminnenende 133-2 und das Armaußenende 133-1 durch einen Armmittelbereich 133-3 verbunden sind, wobei insbesondere eine Endbreite 135-1 des Armaußenendes 133-1 und/oder des Arminnenendes 133-2 größer als eine Breite 135-2 des Armmittelbereichs 133-3 ist.

Hierbei weisen das Armaußenende 133-1 und/oder das Arminnenende 133-2 insbesondere einen gekrümmten Außenrand 137, insbesondere einen konkav gekrümmten Außenrand 137, auf.

Ferner ist insbesondere zwischen zwei benachbarten Armen 125 der Riemenscheibe 119 jeweils ein Durchbruch 139 geformt. Insbesondere nimmt eine Durchbruchsbreite 141 des jeweiligen Durchbruchs 139 von dem Nabenbereich 121 zumindest abschnittsweise in Richtung der äußeren Felge 123 zu. Insbesondere nimmt eine Durchbruchsbreite 141 des jeweiligen Durchbruchs 139 von dem Nabenbereich 121 zumindest abschnittsweise in Richtung der äußeren Felge 123 ab. Eine Größe des jeweiligen Durchbruchs 139 ist insbesondere abhängig von dem Armwinkel 131 zwischen den Erstreckungsachsen 128 der jeweiligen den Durchbruch 139 begrenzenden Arme 125.

Die Arme 125 weisen insbesondere jeweils eine sich von dem Nabenbereich 121 zu der äußeren Felge 123 erstreckende Verdickungsstrebe 143 auf, wobei die Verdickungsstrebe 143 insbesondere an einer der Laugenbehälterrückwand 105-1 abgewandten Seite des jeweiligen Arms 125 angeordnet ist.

Ferner weist der Nabenbereich 121 eine Nabenöffnung 145 auf, in welcher die Welle 117 drehfest aufgenommen ist, wobei insbesondere die Verdickungsstreben 143 mit einem die Nabenöffnung 145 umlaufenden Verdickungsabschnitt 147 des Nabenbereichs 121 verbunden sind.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### Bezugszeichenliste

- 100: Wäschepflegegerät
- 101: Vorratsbehälter
- 102: Gerätegehäuse
- 103: Gerätetür
- 105: Laugenbehälter
- 105-1: Laugenbehälterrückwand
- 107: Wäschetrommel
- 109: Trommelantrieb
- 110: Rotationsachse
- 111: Rotationsrichtung
- 113: Antriebsschaft
- 115: Antriebsriemen
- 117: Welle
- 119: Riemenscheibe
- 121: Nabenbereich
- 123: Äußere Felge
- 125: Arme
- 125-n: Jeweiliger Arm
- 126: Symmetrieachse
- 127: Erhöhungen
- 128: Erstreckungsachse der Arme
- 128-1: Erstreckungsachse der Erhöhungen
- 129: Mittenbereich der Laugenbehälterrückwand
- 130: Erhöhungswinkel
- 131: Armwinkel
- 131-n: Jeweiliger Armwinkel
- 132: Steg
- 133-1: Armaußenende
- 133-2: Arminnenende
- 133-3: Armmittelbereich
- 135-1: Endbreite
- 135-2: Breite des Armmittelbereichs
- 137: Außenrand
- 139: Durchbruch
- 141: Durchbruchsbreite
- 143: Verdickungsstrebe
- 145: Nabenöffnung
- 147: Verdickungsabschnitt

## Patentansprüche

1. Wäschepflegegerät (100) mit einer Wäschetrommel (107) zur Aufnahme von Wäsche, einem Laugenbehälter (105) zur Aufnahme von Waschflüssigkeit, wobei die Wäschetrommel (107) in dem Laugenbehälter (105) angeordnet ist und eine Welle (117) aufweist, einer Riemenscheibe (119), welche mit der Welle (117) drehfest verbunden ist, wobei der Laugenbehälter (105) an einer der Riemenscheibe (119) zugewandten Laugenbehälterrückwand (105-1) eine Mehrzahl von Erhöhungen (127) aufweist, und einem Trommelantrieb (109), welcher ausgebildet ist, die Wäschetrommel (107) zu rotieren, wobei der Trommelantrieb (109) einen Antriebsschaft (113) und einen Antriebsriemen (115) aufweist,
wobei die Riemenscheibe (119) einen Nabenbereich (121) aufweist, welcher mit der Welle (117) drehfest verbunden ist,
wobei die Riemenscheibe (119) eine äußere Felge (123) aufweist, welche den Nabenbereich (121) umläuft, wobei der Antriebsriemen (115) an der äußeren Felge (123) und an dem Antriebsschaft (113) anliegt, um eine Rotation des Antriebsschaftes (113) auf die Riemenscheibe (119) zu übertragen und die Wäschetrommel (107) zu rotieren, und
die Riemenscheibe (119) eine Mehrzahl von Armen (125, 125-1, 125-2, 125-3, 125-4, 125-5) aufweist, welche sich von dem Nabenbereich (121) zu der äußeren Felge (123) jeweils entlang einer Erstreckungsachse (128) erstrecken,
**dadurch gekennzeichnet, dass**
zumindest ein Armwinkel (131, 131-1, 131-2, 131-3, 131-4, 131-5) zwischen den jeweiligen Erstreckungsachsen (128) zweier benachbarter Armen (125, 125-1, 125-2, 125-3, 125-4, 125-5) unterschiedlich zu einem anderen Armwinkel (131, 131-1, 131-2, 131-3, 131-4, 131-5) zwischen den jeweiligen Erstreckungsachsen (128) zweier benachbarter Armen (125, 125-1, 125-2, 125-3, 125-4, 125-5) ist.

2. Wäschepflegegerät (100) nach Anspruch 1, wobei die Riemenscheibe (119) als eine teilsymmetrische Riemenscheibe (119) ausgebildet ist, wobei insbesondere der zumindest eine Armwinkel (131, 131-1, 131-2, 131-3, 131-4, 131-5) und ein weiterer Armwinkel (131, 131-1, 131-2, 131-3, 131-4, 131-5), welcher zwischen den jeweiligen Erstreckungsachsen (128) zweier benachbarter weiterer Arme (125, 125-1, 125-2, 125-3, 125-4, 125-5) gebildet ist, gleich groß sind.

3. Wäschepflegegerät (100) nach Anspruch 1 oder 2, wobei die Riemenscheibe (119) als eine teilsymmetrische Riemenscheibe (119) ausgebildet ist, wobei der andere Armwinkel (131, 131-1, 131-2, 131-3, 131-4, 131-5) und ein weiterer anderer Armwinkel (131, 131-1, 131-2, 131-3, 131-4, 131-5), welcher zwischen den jeweiligen Erstreckungsachsen (128) zweier weiterer benachbarter Arme (125, 125-1, 125-2, 125-3, 125-4, 125-5) gebildet ist, gleich groß sind.

4. Wäschepflegegerät (100) nach einem der vorangehenden Ansprüche, wobei die Riemenscheibe (119) als eine teilsymmetrische Riemenscheibe (119) ausgebildet ist, wobei sich die Arme (125, 125-1, 125-2, 125-3, 125-4, 125-5) spiegelsymmetrisch zu einer Symmetrieachse (126) der Riemenscheibe (119) erstrecken, wobei die Symmetrieachse (126) insbesondere einer Erstreckungsachse (128) eines Armes (125, 125-1, 125-2, 125-3, 125-4, 125-5) entspricht.

5. Wäschepflegegerät (100) nach Anspruch 1, wobei die Riemenscheibe (119) als eine nichtsymmetrische Riemenscheibe (119) ausgebildet ist, wobei alle Armwinkel (131, 131-1, 131-2, 131-3, 131-4, 131-5) zwischen den jeweiligen Erstreckungsachsen (128) jeweils zweier benachbarter Armen (125, 125-1, 125-2, 125-3, 125-4, 125-5) unterschiedlich sind.

6. Wäschepflegegerät (100) nach einem der vorangehenden Ansprüche, wobei die zwischen den jeweiligen Erstreckungsachsen (128) zweier benachbarter Arme (125, 125-1, 125-2, 125-3, 125-4, 125-5) der Riemenscheibe (119) gebildeten Armwinkel (131, 131-1, 131-2, 131-3, 131-4, 131-5) von den jeweiligen Armwinkeln (131, 131-1, 131-2, 131-3, 131-4, 131-5) einer entsprechenden symmetrischen Riemenscheibe (119) um bis zu 10° abweichen, insbesondere um bis zu 7°.

7. Wäschepflegegerät (100) nach einem der vorangehenden Ansprüche, wobei sich die Erhöhungen (127) zumindest abschnittsweise radial von einem Mittenbereich (129) der Laugenbehälterrückwand (105-1) jeweils entlang einer weiteren Erstreckungsachse (128-1) erstrecken, wobei zumindest ein Erhöhungswinkel (130) zwischen den jeweiligen weiteren Erstreckungsachsen (128-1) zweier benachbarter Erhöhungen (127) unterschiedlich zu einem anderen Erhöhungswinkel (130) zwischen den jeweiligen weiteren Erstreckungsachsen (128-1) zweier benachbarter Erhöhungswinkel (130) ist.

8. Wäschepflegegerät (100) mit einer Wäschetrommel (107) zur Aufnahme von Wäsche, einem Laugenbehälter (105) zur Aufnahme von Waschflüssigkeit, wobei die Wäschetrommel (107) in dem Laugenbehälter (105) angeordnet ist und eine Welle (117) aufweist, einer Riemenscheibe (119), welche mit der Welle (117) drehfest verbunden ist, wobei der Laugenbehälter (105) an einer der Riemenscheibe (119) zugewandten Laugenbehälterrückwand (105-1) eine Mehrzahl von Erhöhungen (127) aufweist, und einem Trommelantrieb (109), welcher ausgebildet ist, die Wäschetrommel (107) zu rotieren, wobei der Trommelantrieb (109) einen Antriebsschaft (113) und einen Antriebsriemen (115) aufweist,
wobei die Riemenscheibe (119) einen Nabenbereich (121) aufweist, welcher mit der Welle (117) drehfest verbunden ist, und wobei die Riemenscheibe (119) eine äußere Felge (123) aufweist, welche den Nabenbereich (121) umläuft, wobei die Riemenscheibe (119) eine Mehrzahl von Armen (125, 125-1, 125-2, 125-3, 125-4, 125-5) aufweist, welche sich von dem Nabenbereich (121) zu der äußeren Felge (123) jeweils entlang einer Erstreckungsachse (128) erstrecken,
wobei der Antriebsriemen (115) an der äußeren Felge (123) und an dem Antriebsschaft (113) anliegt, um eine Rotation des Antriebsschaftes (113) auf die Riemenscheibe (119) zu übertragen und die Wäschetrommel (107) zu rotieren, **dadurch gekennzeichnet, dass**
sich die Erhöhungen (127) zumindest abschnittsweise radial von einem Mittenbereich (129) der Laugenbehälterrückwand (105-1) jeweils entlang einer weiteren Erstreckungsachse (128-1) erstrecken,
wobei zumindest ein Erhöhungswinkel (130) zwischen den jeweiligen weiteren Erstreckungsachsen (128-1) zweier benachbarter Erhöhungen (127) unterschiedlich zu einem anderen Erhöhungswinkel (130) zwischen den jeweiligen weiteren Erstreckungsachsen (128-1) zweier benachbarter Erhöhungen (127) ist.

9. Wäschepflegegerät (100) nach einem der vorangehenden Ansprüche, wobei die Arme (125, 125-1, 125-2, 125-3, 125-4, 125-5) der Riemenscheibe (119) jeweils ein mit der äußeren Felge (123) verbundenes Armaußenende (133-1) und ein mit dem Nabenbereich (121) verbundenes Arminnenende (133-2) aufweisen, wobei das Arminnenende (133-2) und das Armaußenende (133-1) durch einen Armmittelbereich (133-3) verbunden sind, wobei insbesondere eine Endbreite (135-1) des Armaußenendes (133-1) und/oder des Arminnenendes (133-2) größer als eine Breite (135-2) des Armmittelbereichs (133-3) ist.

10. Wäschepflegegerät (100) nach Anspruch 9, wobei das Armaußenende (133-1) und/oder das Arminnenende (133-2) einen gekrümmten Außenrand (137), insbesondere einen konkav gekrümmten Außenrand (137), aufweisen.

11. Wäschepflegegerät (100) nach einem der vorangehenden Ansprüche, wobei zwischen zwei benachbarten Armen (125, 125-1, 125-2, 125-3, 125-4, 125-5) der Riemenscheibe (119) jeweils ein Durchbruch (139) geformt ist.

12. Wäschepflegegerät (100) nach Anspruch 11, wobei eine Durchbruchsbreite (141) des jeweiligen Durchbruchs (139) von dem Nabenbereich (121) in Richtung der äu-βeren Felge (123) zunimmt, und/oder wobei eine Durchbruchsbreite (141) des jeweiligen Durchbruchs (139) von dem Nabenbereich (121) in Richtung der äußeren Felge (123) zumindest abschnittsweise abnimmt.

13. Wäschepflegegerät (100) nach Anspruch 11 oder 12, wobei eine Größe des jeweiligen Durchbruchs (139) abhängig von dem Armwinkel (131, 131-1, 131-2, 131-3, 131-4, 131-5) zwischen den Erstreckungsachsen (128) der jeweiligen den Durchbruch (139) begrenzenden Arme (125, 125-1, 125-2, 125-3, 125-4, 125-5) ist.

14. Wäschepflegegerät (100) nach einem der vorangehenden Ansprüche, wobei die Arme (125, 125-1, 125-2, 125-3, 125-4, 125-5) jeweils eine sich von dem Nabenbereich (121) zu der äußere Felge (123) erstreckende Verdickungsstrebe (143) aufweisen, wobei die Verdickungsstrebe (143) insbesondere an einer der Laugenbehälterrückwand (105-1) abgewandten Seite des jeweiligen Arms (125, 125-1, 125-2, 125-3, 125-4, 125-5) angeordnet ist.

15. Wäschepflegegerät (100) nach einem der vorangehenden Ansprüche, wobei der Nabenbereich (121) eine Nabenöffnung (145) aufweist, in welcher die Welle (117) drehfest aufgenommen ist, wobei insbesondere bei dem Wäschepflegegerät gemäß Anspruch 14 die Verdickungsstreben (143) mit einem die Nabenöffnung (145) umlaufenden Verdickungsabschnitt (147) des Nabenbereichs (121) verbunden sind.

## Claims

1. Laundry care appliance (100) with a laundry drum (107) for receiving laundry, an outer tub (105) for receiving washing liquor, wherein the laundry drum (107) is arranged in the outer tub (105) and has a shaft (117), a pulley (119) which is connected to the shaft (117) in a torque-proof manner, wherein on an outer tub rear wall (105-1) facing the pulley (119) the outer tub (105) has a plurality of ridges (127), and a drum drive (109) which is embodied to rotate the laundry drum (107), wherein the drum drive (109) has a drive shaft (113) and a drive belt (115),
wherein the pulley (119) has a hub region (121) which is connected to the shaft (117) in a torque-proof manner,
wherein the pulley (119) has an outer rim (123), which encircles the hub region (121), wherein the drive belt (115) rests against the outer rim (123) and against the drive shaft (113) in order to transfer a rotation of the drive shaft (113) to the pulley (119) and to rotate the laundry drum (107), and
the pulley (119) has a plurality of arms (125, 125-1, 125-2, 125-3, 125-4, 125-5) which extend from the hub region (121) to the outer rim (123) in each case along an extension axis (128),
**characterised in that**
at least one arm angle (131, 131-1, 131-2, 131-3, 131-4, 131-5) between the respective extension axes (128) of two adjacent arms (125, 125-1, 125-2, 125-3, 125-4, 125-5) is different to another arm angle (131, 131-1, 131-2, 131-3, 131-4, 131-5) between the respective extension axes (128) of two adjacent arms (125, 125-1, 125-2, 125-3, 125-4, 125-5).

2. Laundry care appliance (100) according to claim 1, wherein the pulley (119) is embodied as a partially symmetrical pulley (119), wherein in particular the at least one arm angle (131, 131-1, 131-2, 131-3, 131-4, 131-5) and a further arm angle (131, 131-1, 131-2, 131-3, 131-4, 131-5), which is formed between the respective extension axes (128) of two adjacent further arms (125, 125-1, 125-2, 125-3, 125-4, 125-5), are of equal size.

3. Laundry care appliance (100) according to claim 1 or 2, wherein the pulley (119) is embodied as a partially symmetrical pulley (119), wherein the other arm angle (131, 131-1, 131-2, 131-3, 131-4, 131-5) and a further other arm angle (131, 131-1, 131-2, 131-3, 131-4, 131-5), which is formed between the respective extension axes (128) of two further adjacent arms (125, 125-1, 125-2, 125-3, 125-4, 125-5), are of equal size.

4. Laundry care appliance (100) according to one of the preceding claims, wherein the pulley (119) is embodied as a partially symmetrical pulley (119), wherein the arms (125, 125-1, 125-2, 125-3, 125-4, 125-5) extend in mirror symmetry with respect to an axis of symmetry (126) of the pulley (119), wherein the axis of symmetry (126) corresponds in particular to an extension axis (128) of an arm (125, 125-1, 125-2, 125-3, 125-4, 125-5).

5. Laundry care appliance (100) according to claim 1, wherein the pulley (119) is embodied as a non-symmetrical pulley (119), wherein all arm angles (131, 131-1, 131-2, 131-3, 131-4 131-5) between the respective extension axes (128) of each two adjacent arms (125, 125-1, 125-2, 125-3, 125-4, 125-5) in each case are different.

6. Laundry care appliance (100) according to one of the preceding claims, wherein the arm angles (131, 131-1, 131-2, 131-3, 131-4, 131-5) formed between the respective extension axes (128) of two adjacent arms (125 125-1, 125-2, 125-3, 125-4, 125-5) of the pulley (119) differ from the respective arm angles (131, 131-1, 131-2, 131-3, 131-4, 131-5) of a corresponding symmetrical pulley (119) by up to 10°, in particular by up to 7°.

7. Laundry care appliance (100) according to one of the preceding claims, wherein the ridges (127) extend at least in sections radially from a central region (129) of the outer tub rear wall (105-1) in each case along a further extension axis (128-1), wherein at least one ridge angle (130) between the respective further extension axes (128-1) of two adjacent ridges (127) differs from another ridge angle (130) between the respective further extension axes (128-1) of two adjacent ridge angles (130).

8. Laundry care appliance (100) with a laundry drum (107) for receiving laundry, an outer tub (105) for receiving washing liquor, wherein the laundry drum (107) is arranged in the outer tub (105) and has a shaft (117), a pulley (119), which is connected to the shaft (117) in a torque-proof manner, wherein on an outer tub rear wall (105-1) facing the pulley (119) the outer tub (105) has a plurality of ridges (127), and a drum drive (109), which is embodied to rotate the laundry drum (107), wherein the drum drive (109) has a drive shaft (113) and a drive belt (115),
wherein the pulley (119) has a hub region (121) which is connected to the shaft (117) in a torque-proof manner and wherein the pulley (119) has an outer rim (123), which encircles the hub region (121), wherein the pulley (119) has a plurality of arms (125, 125-1, 125-2, 125-3, 125-4, 125-5), which extend from the hub region (121) to the outer rim (123) in each case along an extension axis (128),
wherein the drive belt (115) rests against the outer rim (123) and against the drive shaft (113) in order to transfer a rotation of the drive shaft (113) to the pulley (119) and to rotate the laundry drum (107), **characterised in that**
the ridges (127) extend at least in sections radially from a central region (129) of the outer tub rear wall (105-1) in each case along a further extension axis (128-1),
wherein at least one ridge angle (130) between the respective further extension axes (128-1) of two adjacent ridges (127) differs from another ridge angle (130) between the respective further extension axes (128-1) of two adjacent ridges (127).

9. Laundry care appliance (100) according to one of the preceding claims, wherein the arms (125, 125-1, 125-2, 125-3, 125-4, 125-5) of the pulley (119) in each case have an arm outer end (133-1) connected to the outer rim (123) and an arm inner end (133-2) connected to the hub region (121), wherein the arm inner end (133-2) and the arm outer end (133-1) are connected by an arm central region (133-3), wherein in particular an end width (135-1) of the arm outer end (133-1) and/or of the arm inner end (133-2) is larger than a width (135-2) of the arm central region (133-3).

10. Laundry care appliance (100) according to claim 9, wherein the arm outer end (133-1) and/or the arm inner end (133-2) have a curved outer edge (137), in particular a concave curved outer edge (137).

11. Laundry care appliance (100) according to one of the preceding claims, wherein an opening (139) is formed in each case between two adjacent arms (125, 125-1, 125-2, 125-3, 125-4, 125-5) of the pulley (119).

12. Laundry care appliance (100) according to claim 11, wherein an opening width (141) of the respective opening (139) increases in size from the hub region (121) in the direction of the outer rim (123) and/or wherein an opening width (141) of the respective opening (139) decreases in size from the hub region (121) in the direction of the outer rim (123) at least in sections.

13. Laundry care appliance (100) according to claim 11 or 12, wherein a size of the respective opening (139) is dependent on the arm angle (131, 131-1, 131-2, 131-3, 131-4, 131-5) between the extension axes (128) of the respective arms (125, 125-1, 125-2, 125-3, 125-4, 125-5) bounding the opening (139).

14. Laundry care appliance (100) according to one of the preceding claims, wherein the arms (125, 125-1, 125-2, 125-3, 125-4, 125-5) have in each case a reinforcing strut (143) extending from the hub region (121) to the outer rim (123), wherein the reinforcing strut (143) is arranged in particular on a side of the respective arm (125, 125-1, 125-2, 125-3, 125-4, 125-5) facing away from the outer tub rear wall (105-1).

15. Laundry care appliance (100) according of one of the preceding claims, wherein the hub region (121) has a hub opening (145), in which the shaft (117) is received in a torque-proof manner, wherein in particular with the laundry care appliance according to claim 14, the reinforcing struts (143) are connected to a reinforcing section (147) of the hub region (121) which encircles the hub opening (145).

## Revendications

1. Appareil d'entretien du linge (100) comprenant
un tambour à linge (107) recevant le linge,
une cuve de lavage (105) recevant le liquide de lavage, le tambour à linge (107) se trouvant dans la cuve de lavage (105) et présentant un arbre (117),
une poulie à courroie (119), laquelle est raccordée non rotative à l'arbre (117), la cuve de lavage (105) présentant, sur une paroi arrière de la cuve de lavage (105-1), regardant la poulie à courroie (119), une pluralité d'élévations (127), et
un entraînement de tambour (109), lequel est configuré pour faire tourner le tambour à linge (107), l'entraînement de tambour (109) présentant un embout de transmission (113) et une courroie d'entraînement (115),
dans lequel la poulie à courroie (119) présente une zone de moyeu (121), laquelle est raccordée non rotative à l'arbre (117),
dans lequel la poulie à courroie (119) présente une jante extérieure (123), laquelle entoure la zone de moyeu (121), la courroie d'entraînement (115) se trouvant sur la jante extérieure (123) et sur l'embout de transmission (13) pour transmettre la rotation de l'embout de transmission (113) à la poulie à courroie (119) et faire tourner le tambour à linge (107), et la poulie à courroie (119) présente une pluralité de bras (125, 125-1, 125-2, 125-3, 125-4, 125-5), lesquels s'étendent de la zone de moyeu (121) à la jante extérieure (123) à chaque fois le long d'un axe d'extension (128),
**caractérisé en ce que**
au moins un angle de bras (131, 131-1, 131-2, 131-3, 131-4, 131-5) entre les axes d'extension (128) respectifs de deux bras voisins (125, 125-1, 125-2, 125-3, 125-4, 125-5) est différent d'un autre angle de bras (131, 131-1, 131-2, 131-3, 131-4, 131-5) entre les axes d'extension (128) respectifs de deux bras voisins (125, 125-1, 125-2, 125-3, 125-4, 125-5).

2. Appareil d'entretien du linge (100) selon la revendication 1, dans lequel la poulie à courroie (119) est réalisée en tant que poulie à courroie (119) partiellement symétrique, en particulier le au moins un angle de bras (131, 131-1, 131-2, 131-3, 131-4, 131-5) et un angle de bras (131, 131-1, 131-2, 131-3, 131-4, 131-5) supplémentaire, lequel est formé entre deux axes d'extension (128) respectifs de deux bras supplémentaires voisins (125, 125-1, 125-2, 125-3, 125-4, 125-5), étant de même grandeur.

3. Appareil d'entretien du linge (100) selon la revendication 1 ou 2, dans lequel la poulie à courroie (119) est réalisée en tant que poulie à courroie (119) partiellement symétrique, l'autre angle de bras (131, 131-1, 131-2, 131-3, 131-4, 131-5) et un angle de bras (131, 131-1, 131-2, 131-3, 131-4, 131-5) supplémentaire, lequel est formé entre deux axes d'extension (128) respectifs de deux bras supplémentaires voisins (125, 125-1, 125-2, 125-3, 125-4, 125-5), étant de même grandeur.

4. Appareil d'entretien du linge (100) selon l'une des revendications précédentes, dans lequel la poulie à courroie (119) est réalisée en tant que poulie à courroie (119) partiellement symétrique, les bras (125, 125-1, 125-2, 125-3, 125-4, 125-5) s'étendant symétriquement comme en miroir par rapport à un axe de symétrie (126) de la poulie à courroie (119), dans lequel l'axe de symétrie (126) correspond en particulier à l'axe d'extension (128) d'un bras (125, 125-1, 125-2, 125-3, 125-4, 125-5).

5. Appareil d'entretien du linge (100) selon la revendication 1, dans lequel la poulie à courroie (119) est réalisée en tant que poulie à courroie (119) non symétrique, tous les angles de bras (131, 131-1, 131-2, 131-3, 131-4, 131-5) entre les différents axes d'extension (128) respectifs de à chaque fois deux bras voisins (125, 125-1, 125-2, 125-3, 125-4, 125-5) étant différents.

6. Appareil d'entretien du linge (100) selon l'une des revendications précédentes, dans lequel les angles de bras (131, 131-1, 131-2, 131-3, 131-4, 131-5) formés entre les axes d'extension (128) respectifs de deux bras voisins (125, 125-1, 125-2, 125-3, 125-4, 125-5) de la poulie à courroie (119), dévient des angles de bras (131, 131-1, 131-2, 131-3, 131-4, 131-5) respectifs d'une poulie à courroie (119) symétrique correspondante, de 10° maximum, en particulier de 7° maximum.

7. Appareil d'entretien du linge (100) selon l'une des revendications précédentes, dans lequel les élévations (127) s'étendent au moins par section radialement d'une zone centrale (129) de la paroi arrière de la cuve de lavage (105-1) à chaque fois le long d'un axe d'extension (128-1) supplémentaire, au moins un angle d'élévation (130) entre les axes d'extension (128-1) supplémentaires respectifs de deux élévations voisines (127), étant différent d'un autre angle d'élévation (130) entre les axes d'extension (128-1) supplémentaires respectifs de deux angles d'élévation voisins (130).

8. Appareil d'entretien du linge (100) comprenant
un tambour à linge (107) recevant le linge,
une cuve de lavage (105) recevant le liquide de lavage, le tambour à linge (107) se trouvant dans la cuve de lavage (105) et présentant un arbre (117),
une poulie à courroie (119), laquelle est raccordée non rotative à l'arbre (117), la cuve de lavage (105) comprenant, sur une paroi arrière de la cuve de lavage (105-1), regardant la poulie à courroie (119), une pluralité d'élévations (127), et
un entraînement de tambour (109), lequel est configuré pour faire tourner le tambour à linge (107), l'entraînement de tambour (109) présentant un embout de transmission (113) et une courroie d'entraînement (115),
dans lequel la poulie à courroie (119) présente une zone de moyeu (121), laquelle est raccordée non rotative à l'arbre (117), et dans lequel la poulie à courroie (119) présente une jante extérieure (123), laquelle entoure la zone de moyeu (121), la poulie à courroie (119) présentant une pluralité de bras (125, 125-1, 125-2, 125-3, 125-4, 125-5), qui s'étendent de la zone de moyeu (121) à la jante extérieure (123) à chaque fois le long d'un axe d'extension (128),
dans lequel la courroie d'entraînement (115) se trouve sur la jante extérieure (123) et sur l'embout de transmission (113), pour transmettre une rotation de l'embout de transmission (113) à la poulie à courroie (119) et faire tourner le tambour à linge (107), **caractérisé en ce que**
les élévations (127) s'étendent au moins par section radialement d'une zone centrale (129) de la paroi arrière de la cuve de lavage (105-1) à chaque fois le long d'un axe d'extension (128-1) supplémentaire,
dans lequel au moins un angle d'élévation (130) entre les axes d'extension (128-1) supplémentaires respectifs de deux élévations voisines (127), est différent d'un autre angle d'élévation (130) entre les axes d'extension (128-1) supplémentaires respectifs de deux élévations voisines (127).

9. Appareil d'entretien du linge (100) selon l'une des revendications précédentes, dans lequel les bras (125, 125-1, 125-2, 125-3, 125-4, 125-5) de la poulie à courroie (119) présentent à chaque fois une extrémité extérieure de bras (133-1) raccordée à la jante extérieure (123) et une extrémité intérieure de bras (133-2) raccordée à la zone de moyeu (121), l'extrémité intérieure de bras (133-2) et l'extrémité extérieure de bras (133-1) étant raccordées par une zone centrale de bras (133-3), dans laquelle en particulier une largeur terminale (135-1) de l'extrémité extérieure de bras (133-1) et/ou de l'extrémité intérieure de bras (133-2) est plus grande qu'une largeur (135-2) de la zone centrale de bras (133-3).

10. Appareil d'entretien du linge (100) selon la revendication 9, dans lequel l'extrémité extérieure de bras (133-1) et/ou l'extrémité intérieure de bras (133-2) présentent une arête extérieure (137) courbée, en particulier une arête extérieure (137) courbée formant une concavité.

11. Appareil d'entretien du linge (100) selon l'une des revendications précédentes, dans lequel à chaque fois un passage (139) est formé entre deux bras voisins (125, 125-1, 125-2, 125-3, 125-4, 125-5) de la poulie à courroie (119).

12. Appareil d'entretien du linge (100) selon la revendication 11, dans lequel une largeur de passage (141) du passage (139) respectif de la zone de moyeu (121) augmente en direction de la jante extérieure (123), et/ou dans lequel une largeur de passage (141) du passage (139) respectif de la zone de moyeu (121) diminue au moins par section en direction de la jante extérieure (123).

13. Appareil d'entretien du linge (100) selon la revendication 11 ou 12, dans lequel une grandeur du passage (139) respectif dépend de l'angle de bras (131, 131-1, 131-2, 131-3, 131-4, 131-5) entre les axes d'extension (128) des bras respectifs (125, 125-1, 125-2, 125-3, 125-4, 125-5) délimitant le passage (139).

14. Appareil d'entretien du linge (100) selon l'une des revendications précédentes, dans lequel les bras (125, 125-1, 125-2, 125-3, 125-4, 125-5) présentent à chaque fois un montant grossissant (143) s'étendant de la zone de moyeu (121) à la jante extérieure (123), le montant grossissant (143) se trouvant en particulier sur un côté du bras respectif (125, 125-1, 125-2, 125-3, 125-4, 125-5) tournant le dos à la paroi arrière de la cuve de lavage (105-1).

15. Appareil d'entretien du linge (100) selon l'une des revendications précédentes, dans lequel la zone de moyeu (121) présente un orifice de moyeu (145) qui loge fixement l'arbre (117), dans lequel en particulier pour l'appareil d'entretien du linge selon la revendication 14, les montants grossissants (143) sont raccordés avec une section grossissante (147) de la zone de moyeu (121) qui entoure l'orifice de moyeu (145).
